# EUROPEAN PATENT APPLICATION

(11) **EP 4 266 121 A1**
(43) Date of publication of application: **25.10.2023**
(21) Application number: 22186654.4
(22) Date of filing: 25.07.2022
(51) Int. Cl.: G03B 15/00, B66C 21/00, B66D 1/00, F16M 11/00, G03B 17/56

(54) **AN AERIAL SYSTEM FOR A CAMERA**

(30) Priority: 20.04.2022 PT 2022117916
(71) Applicant: OmniCam4Sky, Lda., 2665-618 Venda Do Pinheiro (PT)
(72) Inventor: QUINTA GASPAR, JORGE MANUEL, VENDA DO PINHEIRO (PT); NUNES GUERREIRO, PAULO JOSÉ, VENDA DO PINHEIRO (PT)
(74) Representative: do Nascimento Gomes, Rui

(57) **Abstract**

The present disclosure refers to aerial systems for cameras, typically for stabilized cameras, and also called suspended camera systems, which allow to move a camera through a three-dimensional space by means of cables. The present disclosure includes an aerial system for a camera, which comprises a main axle and at least three arm axles, the arm axles being perpendicular to and independently rotatable around said main axle. The arm axles are coupled to arms which in turn couple to a cable which is fed and reeled from a main reel for feeding and reeling a cable, and, upon coupling of a cable to each arm, the cables support a camera head coupled to the said means for coupling. The solution of the present disclosure enables, including through the provision of arm axles which rotate in relation to a main axle and independently from each other, to reach a wider area.

## Description

### FIELD OF THE DISCLOSURE

The present disclosure relates to the area of aerial systems for cameras, typically for stabilized cameras, and also called suspended camera systems, which allow to move a camera through a three-dimensional space by means of cables.

### PRIOR ART

Aerial systems typically involve the provision of cables at a certain height, wherein those cables are, on one side, connected to a camera system and, on the other side, reeled (in a reel). By controlling a reel, the camera system is pulled by means of the respective cable closer to the reel.

In systems with three or more reels, the control of the reels allows to move the camera system to a desired position. Reels may be provided on the ground and pulleys at a certain height. By passing each cable through a pulley, the desired heights for a camera may be obtained while maintaining reels on the ground.

Known aerial systems typically involve the provision of a stabilized camera, for instance through a gimbal. Such camera head system is then coupled to a platform to which the cables are connected, usually by means of arms which project from the platform and to which the cables are connected.

A typical platform may be modelled as a parallelepiped arranged horizontally.

From a bottom surface of such platform may be provided a gimbal coupled to a camera. The gimbal may freely rotate with regard to the platform, provided a certain damping.

From the corners of the bottom surface of the platform project the arms. The arms comprise two sections: a first section which is jointly fixed to the platform and a second section which rotates in relation to the first section, such axles of rotation being in a same plane as the lower surface of platform.

Such rotation allows a greater manoeuvrability of the platform and, correspondingly, of the whole aerial system having the camera head.

Yet, with regard to the three-dimensional accessibility of the aerial system, such prior art solutions have an inescapable drawback, as they do not allow to efficiently cover a wide three-dimensional area.

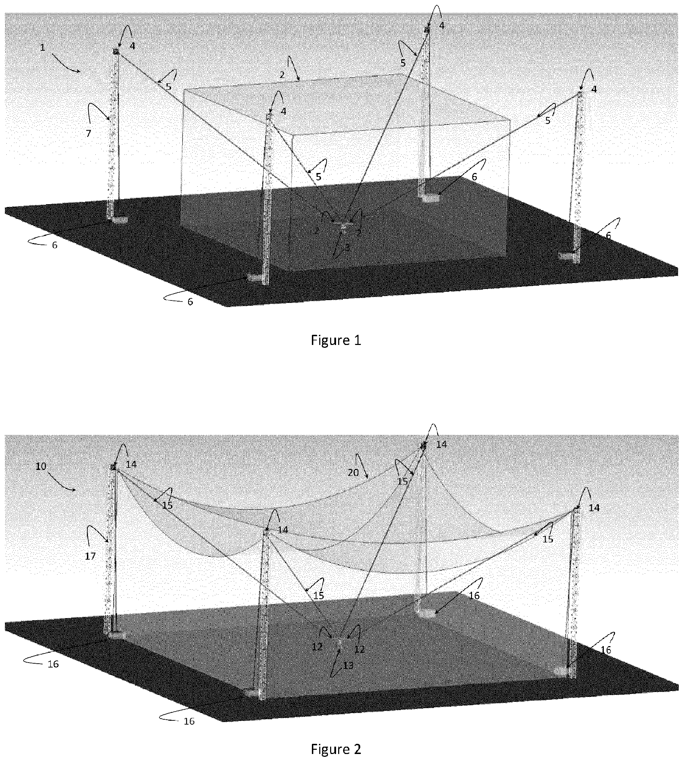

Such drawback is represented in Figure 1, which contains the so-called flying area of such prior art solutions. The flying area of an aerial system refers to the positions in which the camera head may be placed through the control of the reels, and within the whole three-dimensional area provided between the pulleys and the ground.

Due to the fact that the arms are jointly fixed to the platform, the platform and arms ensemble restrains the movement of the whole aerial system to positions close to the pulleys. Such limitation is highlighted in Figure 1, which shows a four reel aerial system, a cable being reeled in each of the reels and then conveyed through a respective pulley, before being connected to a respective arm of the aerial system.

The pulleys are provided, for the sake of the figure, on the top of poles.

In Figure 1, the set of the aerial system comprising platform, arms, gimbal and camera is provided close to the ground. The cables are stretched up to such point. From that position, the set may be brought to any of the positions within the imaginary transparent area represented in grey, and which represents the flying area of the system. All the areas in between the boundaries of that flying area and the pulleys are not accessible, and thereby hinder the image capturing abilities of the system.

Such happens mainly due to the rigidity of movement of the prior art systems, and which is represented in Figure 2, which shows how the angle of vision of a camera provided in such prior art aerial systems is covered by cables in certain positions.

The present solution intended innovatively overcomes such drawback, by enabling an aerial system to have a wider flying area when compared to prior art solutions.

### SUMMARY OF THE DISCLOSURE

It is an object of the present disclosure an aerial system for a camera.

The aerial system may comprise i) a main platform, ii) means for coupling to a camera head, iii) a main axle which is perpendicular to said main platform, iv) at least three arm axles, the arm axles being perpendicular to and independently rotatable around said main axle, and all arm axles being arranged such that are part of a same imaginary plane, and v) at least three arms, each coupled to and rotatable around an arm axle,
wherein each arm has coupling means for coupling to a cable which is fed and reeled from a main reel for feeding and reeling a cable, and
wherein, upon coupling of a cable to each arm, the cables support a camera head coupled to the said means for coupling.

The solution of the present disclosure enables, including through the provision of arm axles which rotate in relation to a main axle and independently from each other, to reach a wider area for a camera to capture images.

Each of the arm axles may be rotatable around the main axle through a respective arm axle angle course, each arm axle angle course being defined between a first angle and a second angle, each arm axle angle course and the respective contained angles being unique for each arm axle and respective arm.

The arm axle angle courses of the arm axles may be identical.

Each arm axle angle course may be less than 360° divided by the number of arm axles.

Each of the arm axles may be configured such its rotation in relation to the main axle is free and damped. Damping may be provided by one or more dampers within the main axle.

Each of the arms may be configured such its rotation in relation to the respective arm axle is free and damped. Damping may be provided by a damper within each arm axle.

The aerial system may further comprise a plurality of axle coupling plates, each axle coupling plate being associated to an arm axle, wherein the axle coupling plates are centred in the main axle and connected to the respective arm axle, the independent rotation of each arm axle around the main axle thereby being provided by the respective axle coupling plate.

Each of the arms may be rotatable around the respective arm axle through a respective arm angle course, the arm angle course being defined between a first angle and a second angle.

The arm angle courses of the arms may be identical.

Each arm angle course may be less than 180°.

The main platform may be such that a stabilized camera head is rotatable around a camera axle which is parallel to the main axle.

The camera axle and the main axle may be collinear.

The aerial system may further comprise a plurality of cables in the same number as arms, each cable being coupled to one of the three or more arms, and each cable being is suitable to be reeled from a respective reel.

The aerial system may further comprise a plurality of reels in the same number as cables, each reel being configured to feed and reel one of the cables and thereby being independently associated with a cable and a respective arm.

The aerial system may further comprise a camera head coupled to the means for coupling to a camera head.

The aerial system may further comprise a gimbal, the gimbal being coupled to the means for coupling to a camera head and the camera head being coupled to the gimbal, the camera head thereby being coupled to the means for coupling through the gimbal.

The aerial system may further comprise a plurality of pulleys in the same number as cables, each pulley being associated with a cable, wherein each cable is provided through the respective pulley between the respective reel and arm.

The present disclosure also includes a method for capturing image media with a stabilized camera head. The method may comprise:
- positioning each of the pulleys of the aerial system which comprises a plurality of pulleys at a certain height,
- controlling the reels to suspend a stabilized camera head coupled to or part of the aerial system at a predefined height,
- capturing image media with the stabilized camera head.

The method may further comprise controlling the reels to move the camera head from a first position to a second position.

The method may further comprise controlling the reels to move the camera head from a first position to a second position through a predefined path.

The method may further comprise controlling the reels to move the camera head from a first position to a second position at a predefined velocity.

### DESCRIPTION OF FIGURES

Figure 1 - representation of a prior art aerial system (1), such aerial system (1) comprising four reels (6), a cable (5) being fed and reeled from each of such reels (6), to a total of four cables (5). Each cable (5) is conveyed in a respective pulley (4), thereby the aerial system (1) having a total of four pulleys (4). Pulleys (4) are provided at a certain height by means of poles (7). Each cable (5) connects to a respective arm (2). Arms (2) comprise two sections: a first section which is jointly fixed to a platform (not shown) and a second section which rotates in relation to the first section, such axles of rotation being in a same plane as the lower surface of platform (not shown). A camera head (3) is coupled to the platform. Such prior art solution, due to its configuration - in particular the joint coupling between arms and platform - allows a reduced flying area (2), which is represented in grey.
Figure 2 - representation of an aerial system (10) according to the present disclosure, the aerial system (10) comprising four reels (16), a cable (15) being fed and reeled from each of such reels (16), to a total of four cables (15). Each cable (15) is conveyed in a respective pulley (14), thereby the aerial system (10) having a total of four pulleys (14). Pulleys (14) are provided at a certain height by means of poles (17). Each cable (15) connects to a respective arm (12). Arms (12) are coupled and able to rotate around arm axles which, in turn, rotate around a main axle which is perpendicular to a main platform (not shown). A camera head (13) is coupled to the platform. Such solution provides an enhanced flying area (20), which is represented in grey and much wider than that of Figure 1, representing prior art.

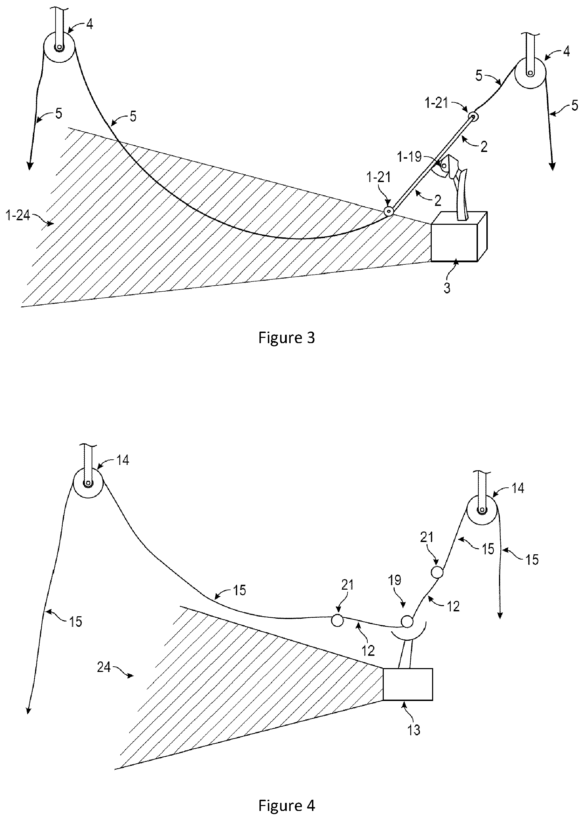

Figure 3-side view representation of the prior art aerial system (1) of Figure 1. The prior art aerial system (1) has arms (2) which rigidly extends from a main platform (not shown). A camera head (3) is provided in the aerial system (1). The arms (2) are coupled to cables (5) through means for coupling (1-21). Cables are provided through pulleys (4). A degree of rotation is given in this prior art aerial system (1), in an axle which is provided between the platform (not shown) and an element for connecting to the camera head (3). Thus, rotation is provided for the camera head (3) in relation to the main platform. The representation of Figure 3 consists of an extreme position of the prior art aerial system (1) in which it is very close to a pulley (4). When the platform is so close to a pulley (4), the cables (5) coupled to the other arms (2) (i.e., the cables which are conveyed through the more distant pulleys) are not stretched and, thus, to efficiently pull the respective arms, since each of such cables (5) (those conveyed through the more distant pulleys) are pulled down by gravity, due to their own weight. This condition is represented in Figure 3. Thus, what happens is that the angle of vision (1-24) of this prior art aerial system (1) in this extreme position is partially covered by cables (5), as can be seen in Figure 3. The result is the reduction of the flying area of the system (1). The highest distance between two pulleys (4) can easily be of 100-200 m.
Figure 4 - side view representation of the aerial system (10) of Figure 2. The aerial system (10) has arms (12) which extend from a main platform (not shown). As for Figure 3, the representation of Figure 4 consists of an extreme position of the aerial system (10) in which it is very close to a pulley (14). When the platform is so close to a pulley (14), the cables (15) coupled to the other arms (12) (i.e., the cables which are conveyed through the more distant pulleys) are now able to be a bit more stretched (when compared to the prior art situation of Figure 3), and the relative positioning of the system in relation to the represented cable (15) now allows that cables (15) are not part of the angle of view (24) of the camera head (13). Thus, the angle of vision (24) of aerial system (10) of the present disclosure, even in such extreme positions is not covered by cables (15), as can be seen in the Figure 4. The result is the reduction of the flying area of the system (1), even for highest distances between pulleys (14) of 100-200 m.

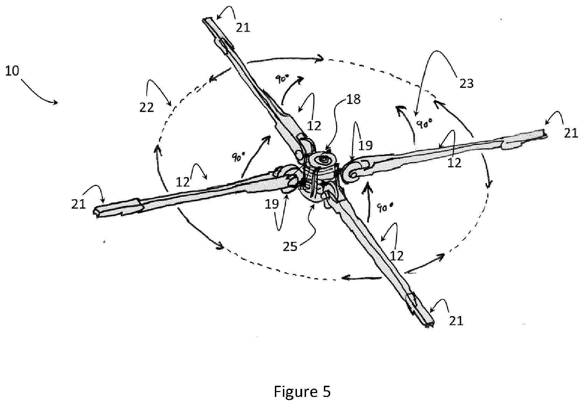

Figure 5 - representation of an aerial system (10) according to the present disclosure, the aerial system (10) comprising four arms (12), each having means for coupling to a cable (21). Each arm is rotatable around an arm axle (19). The rotation of arms (12) around arm axles (19) has a predefined arm angle course (23), which is of 90° in this particular case. Each arm axle (19) is then rotatable around a main axle (18). The rotation of arm axles (19) around the main axle (18) has a predefined arm axle angle course (22), which is of 90° in this particular case (360 divided by four arms). The main axle (18) is provided in a substantially vertical orientation, perpendicularly to the main platform (25). The main platform (25) may take different forms, other than that represented in Figure 5.

### DETAILED DESCRIPTION

As referred, the aerial system may comprise a main platform. Such main platform is an element which also provides a reference in the system, e.g., the main axle being perpendicular to the main platform. The main platform may comprise one or more elements. One of the elements may have a substantially plane form, which may be rectangular, circular, or another shape.

The means for coupling to a camera head-which preferably is a stabilized camera head - may be coupled directly to the camera head or to a gimbal in which the camera head is provided. The gimbal then provides for the stabilization of the camera head.

The arm axles are independently rotatable with regard to the main platform. that allows a higher manoeuvrability of the aerial system, which then is not restrained by the fixed joints and lack of rotation of the prior art systems. Moreover, the arms also rotate with regard to the arm axles. Such provides an additional degree of freedom. Arm axles provided in a same, imaginary, plane provide for an evened reference from which arms project.

Figure 2 shows a four reel aerial system - as was the case in Figure 1 -, with a cable being reeled in each of the reels and then conveyed through a respective pulley, before being connected to a respective arm of the aerial system. Again, the pulleys are provided, for the sake of the figure, on the top of poles.

In Figure 2, the set of the aerial system comprising platform, arms, axles, gimbal and camera is provided close to the ground. The cables are stretched up to such point. From that position, the set may be brought to any of the positions within the imaginary transparent area represented in grey, and which represents a flying area according to the system of the present disclosure. The areas in between the boundaries of that flying area and the pulleys are not accessible, and it can be immediately seen that such inaccessible areas are much reduced compared to Figure 1, the prior art solution.

The camera head may be a stabilized camera head.

By means of cables coupled to the arms the aerial system - and a camera coupled to the aerial system - may be suspended and brought to a desired position, to provide a view for the camera which is above an area to be covered by the camera.

To the set of positions into which a camera may be brought by the aerial system one designates of flying area.

As referred, each of the arm axles may be rotatable around the main axle through a respective arm axle angle course. As the arm axle angle courses (and the respective contained angles) are unique for each arm axle and respective arm, they provide that no collision between arms which rotate around a same axle occurs.

Each of the arm axles may be configured such its rotation in relation to the main axle is free and damped. Damping of the movement of arm axles and, thus, of arms, allows that - although in a free movement - such movement finds resistance and thus is soft, which is a relevant feature considering the technical area, which involves the capture of images.

Accordingly, each of the arms may also be configured such its rotation in relation to the respective arm axle is free and damped.

A plurality of axle coupling plates may also be provided. Each axle coupling plate is associated to an arm axle and centred in the main axle. Each of such plates is also connected to a respective arm axle. Thus, the independent rotation of each arm axle around the main axle is provided by the respective plate. The plates may be stacked, thereby providing a compact solution which still allows the arm axles and respective arms to rotate.

Each of the arms may be rotatable around the respective arm axle through a respective arm angle course, the arm angle course being defined between a first angle and a second angle. The arm angle courses of the arms may be identical and less than 180°. Such that the arms do not collide with any element which is provided below or does not reach angles which could be accessed by other arms.

The movement of an arm, around the arm axle, may be referred to as being along a vertically provided plane, in height.

Also a camera axle which is parallel - may even be collinear - to the main axle may be provided. A stabilized camera head is thus rotatable around the camera axle.

A plurality of cables may be provided. Each cable is associated with an arm, thus the cables being in the same number as arms. Each cable is coupled to an arm and is suitable to be reeled from a respective reel.

A plurality of reels may be provided. Each reel is associated with a cable, and thus reels are in the same number as cables (and, thus, arms). Each reel feeds and reels one of the cables. The control of reels allows to control the reeling of a respective cable and, thus, allows to control the extension of the cable outside the reel and until the arm, thus roughly to the camera head.

Hence, such control of reels and, in particular, of the several reels, allows to determine the desired position for the camera head to be, thus capturing image media from that particular position.

For instance, one may consider reels positioned around a football field and a camera which is suspended through cables connected to such reels. Through the control of the extension of cables outside of the respective reels and up to the respective arms, the positioning a camera head in a desired position to capture a football match play is possible, particularly including positions which are not reachable through prior art systems.

A camera head may be coupled to the means for coupling. A gimbal may be provided. A camera may be connected to the gimbal, which provides for the stabilization of the camera. The gimbal may be coupled to the means for coupling to a camera head, the camera head thereby being coupled to the means for coupling through the gimbal.

A plurality of pulleys may be provided. Each pulley is associated with a cable, and thus, pulleys are in the same number as cables (and, thus, arms). Each cable is provided through - or conveyed - the respective pulley between the respective reel and arm. Thus, pulleys may be provided at a desired height, and the camera head is suspended by means of the cables which are reeled in the reel and coupled to the arms of the aerial system. As previously referred, the control of the reeling allows to control the position of the camera head.

As previously referred and as represented in Figure 2, the aerial system of the present disclosure allows an associated camera to be positioned in a wide flying area formed in a space within the several pulleys.

The aerial system may comprise at least one controller, the controller comprising one or more microprocessors.

Each reel may comprise a controller which controls the reeling, in particular controlling the reeling of the cable in the reel and, thus, controlling the extension of the cable between the reel and the respective arm.

The present disclosure also includes a method for capturing image media with a stabilized camera head. The method may comprise:
- positioning each of the pulleys of the aerial system which comprises a plurality of pulleys at a certain height,
- controlling the reels to suspend a stabilized camera head coupled to or part of the aerial system at a predefined height,
- capturing image media with the stabilized camera head.

The method may further comprise controlling the reels to move the camera head from a first position to a second position. Such movement may follow a predefined path, for instance a path which is known to provide a desired angle of a scene taking place in the area below the camera.

For instance, it may be desired that the path followed by the camera of the aerial system covers a corner kick of a football match from a position which is closer to a player kicking the corner to a position which is closer to the penalty area, forming an elliptical trajectory.

The control of the reeling in the several reels allows to coordinate such predefined path.

In the same way, a predefined velocity of movement from a position to another position may also be desired. The velocity may even be shifting throughout the trajectory. For instance, the velocity may be higher in a first part of the movement and lower in a second part, for the camera to reach a desired position faster and then capture a desired scene, while still moving.

The system, the method and/or their elements include components to perform at least some of the example features and features of the methods described, whether through hardware components (such as memory and / or processor), software or any combination thereof.

In particular, the system may comprise one or more microcontrollers, such as the segment and master microcontrollers, with the capability of receiving external data through inputs and providing actuation of outputs, based on predefined configured rules and/or programming.

An article for use with the system, the method and/or their elements, such as a pre-recorded storage device or other similar computer-readable medium, including program instructions recorded on it, or a computer data signal carrying readable program instructions computer can direct a device to facilitate the implementation of the methods described herein. It is understood that such system, articles of manufacture and computer data signals are also within the scope of the present disclosure.

A "computer-readable medium" means any medium that can store instructions for use or execution by a computer or other computing device, including read-only memory (ROM), erasable programmable read-only memory (EPROM) or flash memory, random access memory (RAM), a portable floppy disk, a drive hard drive (HDD), a solid state storage device (for example, NAND flash or synchronous dynamic RAM (SDRAM)), and/or an optical disc such as a Compact Disc (CD), Digital Versatile Disc (DVD) or Blu-Ray ^{™} Disc.

As will be clear to one skilled in the art, the present disclosure should not be limited to the embodiments described herein, and a number of changes are possible which remain within the scope of the present disclosure.

Of course, the preferred embodiments shown above are combinable, in the different possible forms, being herein avoided the repetition all such combinations.

## Claims

1. An aerial system for a camera, the aerial system comprising i) a main platform, ii) means for coupling to a camera head, iii) a main axle which is perpendicular to said main platform, iv) at least three arm axles, the arm axles being perpendicular to and independently rotatable around said main axle, and all arm axles being arranged such that are part of a same imaginary plane, and v) at least three arms, each coupled to and rotatable around an arm axle,
wherein each arm has coupling means for coupling to a cable which is fed and reeled from a main reel for feeding and reeling a cable, and
wherein, upon coupling of a cable to each arm, the cables support a camera head coupled to the said means for coupling.

2. An aerial system according to the previous claim wherein each of the arm axles is rotatable around the main axle through a respective arm axle angle course, each arm axle angle course being defined between a first angle and a second angle, each arm axle angle course and the respective contained angles being unique for each arm axle and respective arm and, optionally, the arm axle angle courses of the arm axles are identical and, optionally, each arm axle angle course is less than 360° divided by the number of arm axles.

3. An aerial system according to any of the preceding claims wherein each of the arm axles is configured such its rotation in relation to the main axle is free and damped.

4. An aerial system according to any of the preceding claims wherein each of the arms is configured such its rotation in relation to the respective arm axle is free and damped.

5. An aerial system according to any of the preceding claims wherein it further comprises a plurality of axle coupling plates, each axle coupling plate being associated to an arm axle, wherein the axle coupling plates are centred in the main axle and connected to the respective arm axle, the independent rotation of each arm axle around the main axle thereby being provided by the respective axle coupling plate.

6. An aerial system according to any of the preceding claims wherein each of the arms is rotatable around the respective arm axle through a respective arm angle course, the arm angle course being defined between a first angle and a second angle.

7. An aerial system according the previous claim wherein the arm angle courses of the arms are identical and, optionally, each arm angle course is less than 180° and, optionally, the main platform is such that a stabilized camera head is rotatable around a camera axle which is parallel to the main axle and, optionally, the camera axle and the main axle are collinear.

8. An aerial system according to any of the preceding claims wherein it further comprises a plurality of cables in the same number as arms, each cable being coupled to one of the three or more arms, and each cable being is suitable to be reeled from a respective reel.

9. An aerial system according to the previous claim wherein it further comprises a plurality of reels in the same number as cables, each reel being configured to feed and reel one of the cables and thereby being independently associated with a cable and a respective arm.

10. An aerial system according to any of the preceding claims wherein it further comprises a camera head coupled to the means for coupling to a camera head and, optionally, it further comprises a gimbal, the gimbal being coupled to the means for coupling to a camera head and the camera head being coupled to the gimbal, the camera head thereby being coupled to the means for coupling through the gimbal.

11. An aerial system according to any of the claims wherein it further comprises a plurality of pulleys in the same number as cables, each pulley being associated with a cable, wherein each cable is provided through the respective pulley between the respective reel and arm.

12. A method for capturing image media with a stabilized camera head wherein it comprises:
- positioning each of the pulleys of the aerial system of claim 11 at a certain height,
- controlling the reels to suspend a stabilized camera head coupled to or part of the aerial system at a predefined height,
- capturing image media with the stabilized camera head.

13. A method according to the previous claim wherein it further comprises controlling the reels to move the camera head from a first position to a second position.

14. A method according to the previous claim wherein it further comprises controlling the reels to move the camera head from a first position to a second position through a predefined path.

15. A method according to any of the claims 13-14 wherein it further comprises controlling the reels to move the camera head from a first position to a second position at a predefined velocity.
